# EUROPEAN PATENT APPLICATION

(11) **EP 1 195 198 A2**
(43) Date of publication of application: **10.04.2002**
(21) Application number: 01308456.1
(22) Date of filing: 03.10.2001
(51) Int. Cl.: B01J 35/06, B01D 53/86

(54) **Catalyst filter, method for producing the same and method for treating exhaust gas with the same**

(30) Priority: 04.10.2000 JP 2000304635
(71) Applicant: Mitsubishi Heavy Industries, Ltd., Tokyo 100-0005 (JP); SUMITOMO CHEMICAL COMPANY LIMITED, Osaka-shi, Osaka 541-0041 (JP)
(72) Inventor: Horaguchi, Mitsuhiro, Yokohama-shi, Kanagawa-ken (JP); Sugiyama, Hirofumi, Kyoto-shi, Kyoto-fu (JP); Koike, Hironobu, Niihama-shi, Ehime-ken (JP)
(74) Representative: Nicholls, Michael John

(57) **Abstract**

A catalyst filter comprising titania catalyst fiber and at least one layer of nonwoven fabric of polymer fiber, which can remove dust and nitrogen oxides from exhaust gas at the same time, has a high catalytic activity and maintains the high catalytic activity even after vibrating the filter to shake off calcium hydroxide and dust.

## Description

The present invention relates to a catalyst filter, a method for producing the same and a method for treating exhaust gas with the same.

There is known a filter with denitrifying functions, which can remove dust and nitrogen oxides (NOₓ) from exhaust gas generated from incinerators for municipal waste, sludge or industrial wastes, boilers, diesel engines, etc. with a single apparatus. As such a filter, a filter comprising catalyst fiber containing titanium oxide and vanadium oxide is proposed (see JP-A-5-184923, JP-A-1-2587846 (corresponding to USP 5,051,391), etc.).

In general, the filter is vibrated to remove the collected materials from the filter, in particular, to shake off calcium hydroxide (slaked lime) and dust. However, in the case of the filter disclosed in JP-A-5-184923, the catalyst fiber itself drops off from the filter when vibration, in particular, pulsated vibration is applied to the filter, and thus the catalytic activity of the filter tends to decrease. In addition, in the case of the filters disclosed in other publications, since the catalyst fiber comprises vanadium oxide particles supported on titania fiber, the vanadium oxide particles drop off from the catalyst fiber so that the catalytic activity of the filter tends to decrease, even when the catalyst fiber itself does not drop off from the filter.

One object of the present invention is to provide a catalyst filter, which can remove dust and nitrogen oxides from the exhaust gas with a single apparatus, has a high catalytic activity and maintains the high catalytic activity even when the filter is vibrated to shake off calcium hydroxide and dust.

Another object of the present invention is to provide a method for producing such a catalyst filter.

A further object of the present invention is to provide a method for treating exhaust gas using such a filter.

Accordingly, the present invention provides a catalyst filter comprising titania catalyst fiber and at least one layer of nonwoven fabric of polymer fiber.

Furthermore, the present invention provides a method for producing a catalyst filter of the present invention comprising the steps of dispersing titania catalyst fiber and polymer fiber in a solvent (e.g. water, etc.) to obtain a dispersion of the fibers and forming a sheet from the dispersion of the fibers to obtain the catalyst filter.

The present invention also provide a method for producing a catalyst filter of the present invention comprising the step of placing a layer of titania catalyst fiber on a nonwoven fabric of polymer fiber.

In a preferred embodiment, the nonwoven fabric and the titania catalyst fiber in the catalyst filter are fixed together by adhering, knitting with yarns or entwining of the fibers.

In addition, the present invention provides a method for treating exhaust gas comprising passing the exhaust gas through the catalyst filter of the present invention.

The invention will be further described by way of example with reference to the accompanying drawings, in which:-
Fig. 1 is a cross sectional view of the first embodiment of the filter of the present invention.
Fig. 2 is a cross sectional view of the second embodiment of the filter of the present invention.
Fig. 3 is a cross sectional view of the third embodiment of the filter of the present invention.
Fig. 4 is a cross sectional view of the fourth embodiment of the filter having a scrim of the present invention.
Fig. 5 is a cross sectional view of the fifth embodiment of the filter having a scrim of the present invention.
Fig. 6 is a cross sectional view of the sixth embodiment of the filter having a scrim of the present invention.
Fig. 7 is a cross sectional view of the seventh embodiment of the filter having a scrim of the present invention.

The catalyst filter of the present invention comprises titania catalyst fiber and at least one layer of nonwoven fabric of polymer fiber.

The titania catalyst fiber used in the present invention may be a known one. For example, titania catalyst fiber, which contains at least one of metals, metal oxides and complex compounds of an element selected from the group consisting of vanadium, tungsten, aluminum, arsenic, nickel, zirconium, molybdenum, ruthenium, magnesium, calcium and platinum, may be used, as described in JP-A-11-5036 and JP-2000-220038-A.

The use of the titania catalyst fiber according to the present invention can prevent the drop-off of the catalyst from the filter, so that the catalytic activity can be maintained for a long time.

Even when a weight (per unit area) of the titania catalyst fiber is increased in the filter of the present invention, the filter can achieve a high filtration rate without the increase of pressure loss of the filter.

According to the present invention, an amount of an adhesive, etc., which is used to fix the catalyst fiber, can be reduced or avoided to use the titania catalyst fiber in the catalyst filter. Therefore, the decrease of the catalytic activity due to the adhesive, etc. can be suppressed, and thus the inherent activity of the catalyst is effectively used. The titania catalyst fiber may be processed in the form of a sheet by a paper-making method, etc.

Preferably, the titania catalyst fiber contains at least 50 % by weight of titanium oxide and at least 5 % by weight of vanadium oxide, and has a fiber length of at least 50 µm, a fiber diameter of from 2 µm to 100 µm and a porosity of at least 0.05 cm³/g, which is measured by a nitrogen absorption method. The specific surface area of the titania catalyst fiber may be at least 10 m²/g, and is preferably from 20 to 300 m²/g. In the titania catalyst fiber, the porosity of pores having a pore diameter of at least 10 Å (1 nm) may be at least 0.02 cm³/g, and the peak of the pore diameter may be in the range of 10 to 300 Å (1 to 30 nm), and preferably 10 to 100 Å (1 to 10 nm).

The titania catalyst fiber can be prepared, for example, by dissolving a titanium alkoxide (e.g. titanium ethoxide, titanium n-propoxide, titanium isopropoxide, titanium n-butoxide, titanium isobutoxide, titanium sec.-butoxide, titanium tert.-butoxide, etc.) in alcohol (e.g. ethanol, n-propanol, isopropanol, n-butanol, iso-butanol, sec.-butanol, tert.-butanol, etc.), hydrolyzing the alkoxide to form a slurry containing titania, dissolving a vanadium compound (e.g. triethoxyvanadyl, triisopropoxyvanadyl, tri-n-propoxyvanadyl, tri-n-butoxyvanadyl, etc.) in the slurry to obtain a spinning dope, then spinning the spinning dope to obtain precursor fiber, and calcining the precursor fiber.

The nonwoven fabric used in the present invention comprises polymer fiber. Since the titania catalyst fiber is retained in a layer of the nonwoven fabric, the catalyst filter of the present invention can achieve a high dust-collection efficiency while maintaining high permeability or a low pressure loss, and further it can maintain the catalytic activity since the nonwoven fabric prevents the drop-off of the titania catalyst fiber even when the filter is vibrated to shake off calcium hydroxide and dust.

Examples of the polymer fiber include, polyamide fiber, polypropylene fiber, polyester fiber, acrylic fiber, aramid fiber, fluororesin fiber, polyether imide fiber, polyimide fiber, polyphenylene sulfide fiber, polyketone fiber, etc. The nonwoven fabric used in the present invention may comprise one of these fibers, or two or more of these fibers.

A weight ratio of the polymer fiber to the titania catalyst fiber is preferably from 20:1 to 1:1 in order for the catalyst filter to have good processability and long term shape-stability.

The nonwoven fabric comprising the polymer fiber may be produced by any conventional method, for example, a resin bond method comprising adhering the polymer fibers with a resin, a needle punch method comprising entwining the polymer fibers with needles, a thermal bond method comprising thermally bonding the polymer fibers, a water punching method comprising entwining the polymer fibers with a high pressure fluid jet, etc.

In the catalyst filter of the present invention, preferably the titania catalyst fiber is retained in the layer of the nonwoven fabric, or interposed between at least two layers of the nonwoven fabric. In such cases, the drop-off of the catalyst (the catalyst fiber and/or the catalyst component) can be prevented even when the catalyst filter is set on an apparatus which applies pulsed vibration to the catalyst filter to remove the dust collected by the filter.

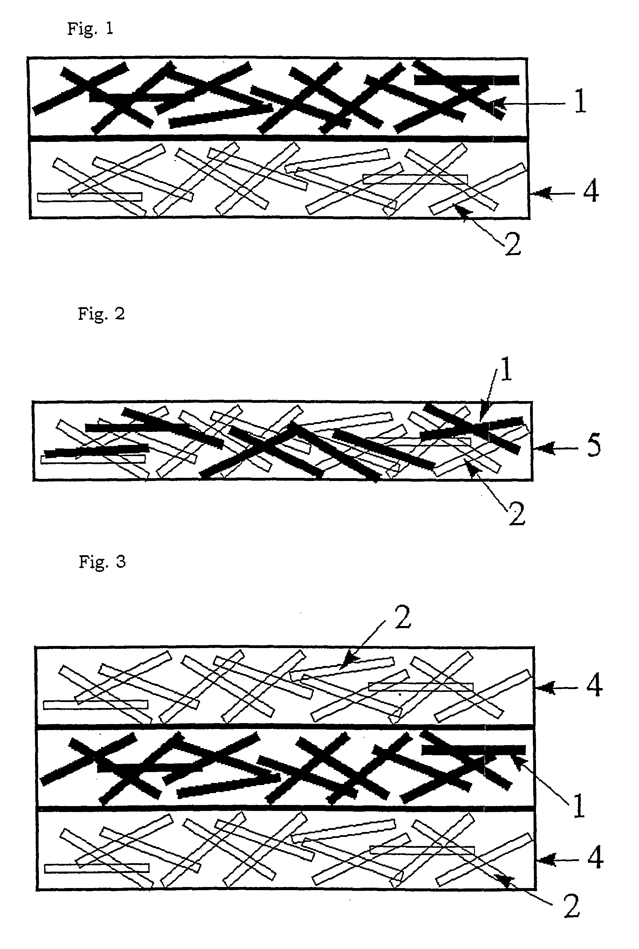

Some typical examples of the catalyst filter of the present invention are shown in Figs. 1, 2 and 3. The catalyst filter of Fig. 1 comprises nonwoven fabric 4 of polymer fiber 2 and titania catalyst fiber 1 which is carried on one surface of nonwoven fabric 4. The catalyst filter of Fig. 2 comprises nonwoven fabric 5 of titania catalyst fiber 1 and polymer fiber 2, in which titania catalyst fiber 1 is present in the layer of the nonwoven fabric of the polymer fiber. The catalyst filter of Fig. 3 comprises nonwoven fabric 4 of polymer fiber 2, a layer of titania catalyst fiber 1 and another nonwoven fabric 4 of polymer fiber 2, which are superimposed in this order.

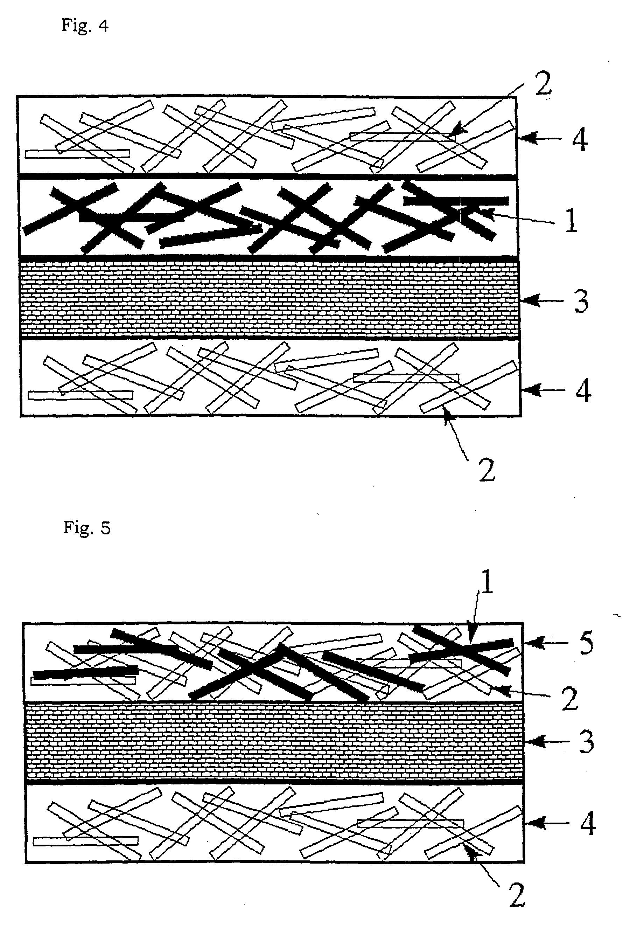

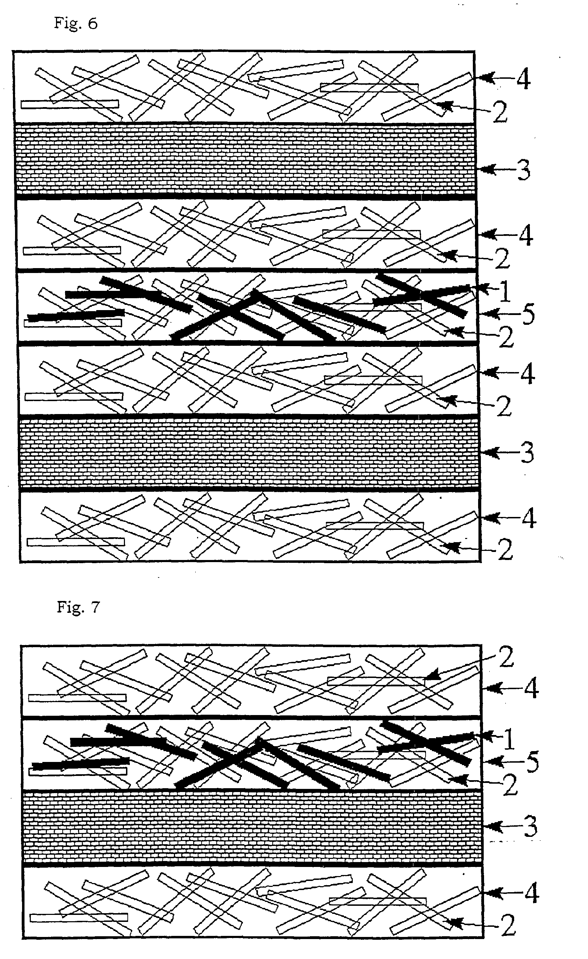

The catalyst filter of the present invention may comprise a scrim, which is a woven fabric of the polymer fiber. Some typical examples of the catalyst filter having the scrim are shown in Figs. 4 to 7. The catalyst filter of Fig. 4 comprises nonwoven fabric 4 of polymer fiber 2, scrim 3, a layer of titania catalyst fiber 1, another nonwoven fabric 4 of polymer fiber, which are superimposed in this order. The catalyst filter of Fig. 5 comprises nonwoven fabric 4 of polymer fiber 2, scrim 3 and nonwoven fabric 5 of polymer fiber 2 containing titania catalyst fiber 1 therein. The catalyst filter of Fig. 6 comprises the first nonwoven fabric 4 of polymer fiber 2, the first scrim 3, the second nonwoven fabric 4 of polymer fabrics 2, nonwoven fabric 5 of polymer fiber 2 containing titania catalyst fiber 1 therein, the third nonwoven fabric 4 of polymer fiber 2, the second scrim 3, and the fourth nonwoven fabric 4 of polymer fiber 2, which are superimposed in this order. The catalyst filter of Fig. 7 comprises the first nonwoven fabric 4 of polymer fiber 2, scrim 3, nonwoven fabric 5 of polymer fiber 2 containing titania catalyst fiber 1 therein, and the second nonwoven fabric 4 of polymer fiber 2, which are superimposed in this order.

The catalyst filter of the present invention may be produced by the following method:

For example, the catalyst filter of Fig. 4 may be manufactured by producing two sheets of nonwoven fabric using the polymer fiber by the needle punch method, superimposing, on one surface of one sheet of the nonwoven fabric, the scrim, the layer of titania catalyst fiber and the other sheet of nonwoven fabric in this order, and needle-punching them all together.

Examples of other methods for producing the catalyst filter of the present invention include a method comprising adhering the titania catalyst fibers and the nonwoven fabric with a resin; a method comprising entwining the titania catalyst fibers with the polymer fibers of the nonwoven fabric with needles; a method comprising knitting the titania catalyst fibers and the nonwoven fabric with yarns; a method comprising thermally bonding the titania catalyst fibers and the nonwoven fabric; and a method comprising entwining the titania catalyst fibers and the polymer fibers of the nonwoven fabric with jetting high pressure water. Alternatively, the catalyst filter can be produced by using the titania catalyst fibers together with the polymer fibers in the step of producing the nonwoven fabric of the polymer fiber so that the titania catalyst fibers are retained in the layer of the nonwoven fabric produced. Furthermore, the catalyst filter may be produced by firstly shaping the polymer fiber by a carding method, placing the titania catalyst fibers and optionally the scrim on the shaped polymer fibers, and then entwining the polymer fibers with the titania catalyst fibers by the needle-punching method.

The nonwoven fabric of the polymer fiber used in the present invention may comprise one kind of the polymer fiber, or two or more kinds of the polymer fibers. When two or more layers of the nonwoven fabric are present in the catalyst filter, the kinds of the polymer fibers in the layers of the nonwoven fabric may be the same or different from each other.

When the catalyst filter has the scrim, the thickness of the nonwoven fabric on the side of the scrim on which the dust are recovered is preferably larger than that of the nonwoven fabric on the opposite side of the scrim. When the thickness of the nonwoven fabric on the opposite side is made small, the pressure loss can be decreased without deteriorating the dust-collection efficiency and the catalytic efficiency of the catalyst filter.

The nonwoven fabric of the catalyst filter according to the present invention may further comprise inorganic fiber such as alumina fiber, silica fiber, zirconia fiber, glass fiber, etc. The use of the inorganic fiber can increase the mechanical strength and heat resistance of the catalyst filter obtained. The inorganic fiber may be supplied to the nonwoven fabric in the same manner as the titania fiber is supplied to the nonwoven fabric. For example, the inorganic fiber, the titania fiber and the polymer fiber are dispersed in water and then processed in the form of a sheet by a paper-making method. Thus, the catalyst filter of the present invention, which comprises the inorganic fiber, is obtained.

The catalyst filter of the present invention can achieve excellent effects when the dust and nitrogen oxides are removed at the same time by a dry method (which is simultaneous dust-collection and denitrification in a dry method). In addition, the catalyst filter of the present invention can be used to remove hazardous materials such as hydrogen chloride, sulfur oxides, organic chlorinated materials (e.g. dioxin), etc., which are generated from the incinerators for municipal waste, sludge or industrial wastes, the boilers, the diesel engines, etc.

As described above, the catalyst filter of the present invention can remove the dust and the nitrogen oxide with a single apparatus, and has a high catalyst activity and maintains the high catalytic activity since the drop-off of the catalyst can be prevented even when the filter is vibrated for shaking off calcium hydroxide and the dust.

Even when the weight of the titania catalyst fiber per unit area is increased, the catalyst filter of the present invention can perform the high-speed filtration without increasing the pressure loss of the filter.

Furthermore, when the catalyst filter of the present invention has a structure in which the titania catalyst fiber is retained in a layer of the nonwoven fabric, or a layer of the titania catalyst fiber is interposed between layers of the nonwoven fabric, the filter can maintain the high catalyst activity since the titania catalyst fiber does not drop off from the filter even when the pulsed vibration is applied to the filter.

The method for producing a catalyst filter according to the present invention can easily provide the catalyst filter, which has a high catalytic activity and maintain the high catalyst activity by preventing the drop-off of the titania catalyst fiber from the filter even when the pulsed vibration is applied to the filter to shake off calcium hydroxide and the dust.

According to the method for treating exhaust gas of the present invention, the dust and the nitrogen oxides can be effectively removed at the same time.

### EXAMPLES

The present invention will be illustrated by the following Examples, which do not limit the scope of the present invention in any way.

The dropping test and the denitrification test were carried out as follows:
Dropping test:
   A disc having a diameter of 10 cm was cut out of a catalyst filter and the periphery of the disc was hardened with a thermosetting resin to obtain a specimen. Then, the specimen was vibrated for 1,000 times with an air pulse jet under a pressure of 3 kg/cm² (0.3 MPa) . From the weight difference of the specimen before and after the test, the amount of materials dropped was calculated.
Denitrification test:
   A catalyst filter having a filtration area of 22 cm² was placed at one end of a glass tube having an inner diameter of 53 mm vertically with respect to the glass tube. Then, a test gas containing 100 ppm of NO, 100 ppm of NH₃, 10 % of O₂, 20 % of H₂O and the rest of N₂ was heated at 200°C and passed through the glass tube from the open end to the end having the filter at a flow rate of 2.2 L/min. From the difference of the concentration of NO before and after passing through the glass tube, a denitrification rate was calculated.

In the Examples, the unit "denier" is an indicator of a fiber diameter and is expressed in terms of a weight (g) per 9, 000 m of fiber. One inch is 2.54 cm.

### Example 1

### Preparation of titania catalyst fiber

Titanium isopropoxide (Extra Pure Reagent available from Wako Pure Chemical Industries, Ltd.) (300.0 g) and ethyl acetoacetate (Guaranteed Reagent available from Wako Pure Chemical Industries, Ltd.) (55.0 g) were dissolved in isopropanol (Guaranteed Reagent available from Wako Pure Chemical Industries, Ltd.) (73.6 g), and the solution obtained was refluxed under nitrogen atmosphere for one hour to obtain Raw Material A.

Separately, pure water (36.0 g) was mixed with isopropanol (324.8 g) to obtain Alcohol A containing 10 % by weight of water.

Then, Alcohol A was added to Raw Material A while stirring and heating the resulting mixture under nitrogen atmosphere and evaporating isopropanol to hydrolyze titanium isopropoxide. After refluxing the mixture for one hour, the mixture was further heated and was concentrated with evaporating isopropanol until the Ti concentration reached 3.46 x 10⁻³ mol/g to obtain a polymer slurry. The rate of hydrolysis was adjusted so that the evaporation rate of isopropanol and the rate of the addition of isopropanol were substantially the same and the addition time was 130 minutes.

To the polymer slurry obtained, tetrahydrofuran (Guaranteed Reagent available from Wako Pure Chemical Industries, Ltd.) (362 g) was added, and the resulting mixture was refluxed for one hour to dissolve the polymer contained in the slurry in tetrahydrofuran. Thereafter, triethoxyvanadyl (available from High Purity Chemicals Co., Ltd.) (51.2 g) was added to the tetrahydrofuran solution, and the resulting mixture was refluxed for another one hour to obtain the solution of the polymer. The amount of triethoxyvanadyl was the amount such that vanadium was contained in the titania catalyst fiber, which was obtained by spinning and calcining the polymer, in an amount of 21 % by weight in terms of vanadium oxide.

The polymer solution obtained above was filtrated through a membrane filter of a fluororesin having a pore diameter of 3 µm. Then, the filtrate was heated and was concentrated with evaporating isopropanol and tetrahydrofuran to obtain a spinning dope (200 g) . The spinning dope obtained was maintained at 40°C and was extruded through a nozzle having a diameter of 50 µm into an air at 40°C, 60%RH with nitrogen gas having a pressure of 20 kg/cm² (2.0 MPa), and the resulting spun material was wound at a rate of 70 m/min. to obtain a precursor fiber. The precursor fiber obtained was treated with steam in a thermostat humidistat vessel at 85°C, 95%RH (partial pressure of steam: 0.053 MPa) for 15 hours, and then was calcined in an air at 500°C for one hour to obtain titania catalyst fiber.

The titania catalyst fiber obtained above was a continuous fiber having a fiber diameter of 15 µm, a BET specific surface area of 65 m²/g, and a porosity (of pores with a pore diameter of at least 10 Å) of 0.18 cm³/g which was measured by a nitrogen absorption method.

According to X-ray diffraction analysis, the titania catalyst fiber consisted of anatase titanium oxide, and any titanium oxide other than anatase one was not found.

When the titania catalyst fiber was observed with a scanning electron microscope, vanadium oxide particles which tended to drop off were not found on the outer surface.

### Production of Nonwoven Fabric A

Polyimide fibers (trade name: P84; 2 deniers; short fibers of 60 mm; available from TOYO BOSEKI SALES, Inc.) were processed by a needle punch method to obtain Nonwoven Fabric A having a weight per unit area of 200 g/m².

### Production of Scrim A

Polyimide fibers (trade name: P84; 960 deniers; 480 filament yarn; available from TOYO BOSEKI SALES, Inc.) were plain woven at a weaving density of 12/10 yarn/inch (warp/weft) to obtain Scrim A having a weight per unit area of 100 g/m².

### Production of catalyst filter and evaluation thereof

Scrim A was placed on Nonwoven Fabric A. Then, on Scrim A, the above-obtained titania catalyst fibers, which had been cut to have a length of about 3 cm, was accumulated to make a layer of the fibers in an amount such that a density of the fibers became 150 g/m². Furthermore, another Nonwoven Fabric A was placed on the layer of the titania catalyst fiber, and the resulting layers were needle punched.

Thereafter, the thickness of the layers was adjusted with flat heat calendering, and the layers were heat treated at 300°C for 30 seconds, followed by singeing with a gas singer to obtain a catalyst filter.

The catalyst filter obtained above was subjected to the dropping test. The dropped amount was less than 3 %. The catalyst filter, which was obtained in the same manner as above, was subjected to the denitrification test. The denitrification rate was 70 % or more.

The catalyst filter, which had been subjected to the dropping test, was further subjected to the denitrification test. The denitrification rate was 70 % or more. The denitrification rate of the catalyst filter did not decrease after the dropping test, although the filter was vibrated with the air pulse jet in the dropping test.

### Example 2

### Production of Nonwoven Fabric B

The titania catalyst fibers which were obtained in the same manner as in Example 1 and were cut to have a length of about 3 cm (150 parts by weight), polyimide fibers (trade name: P84; filament diameter: 20 µm; fiber length: about 5 mm; available from TOYOBOSEKI SALES, Inc.) (100 parts by weight) , kraft pulp obtained from conifers (67 parts by weight) were dispersed in water and were processed by a paper making method to obtain Nonwoven Fabric B having a weight per unit area of 317 g/m². The weight per unit area of the titania catalyst fibers in Nonwoven Fabric B was 150 g/m².

### Production of catalyst filter and evaluation thereof

On Nonwoven Fabric A produced by the method of Example 1, Scrim A produced by the method of Example 1 and Nonwoven Fabric B were placed in this order and the resulting layers were needle punched.

Thereafter, the thickness of the layers was adjusted with flat heat calendering, and the layers were singed with a gas singer to obtain a catalyst filter.

The catalyst filter obtained above was subjected to the dropping test. The dropped amount was less than 3 %. The catalyst filter, which was obtained in the same manner as above, was subjected to the denitrification test. The denitrification rate was 70 % or more.

The catalyst filter, which had been subjected to the dropping test, was further subjected to the denitrification test. The denitrification rate was 70 % or more.

### Example 3

### Production of Nonwoven Fabric C

On Nonwoven Fabric A produced by the method of Example 1, Scrim A produced by the method of Example 1 and another Nonwoven Fabric A were placed in this order and the resulting layers were needle punched. Then, the thickness of the layers was adjusted with flat heat calendering, and the layers were heat treated at 300°C for 30 seconds, followed by singeing with a gas singer to obtain Nonwoven Fabric C having a weight per unit area of 500 g/m².

### Production of catalyst filter and evaluation thereof

Nonwoven Fabric C, Nonwoven Fabric B produced by the method of Example 2 and another Nonwoven Fabric C were placed in this order. Then, usuing fluororesin fibers (trade name: PROFILEN; 400 deniers; available from Lenzing), were sewed the resulting layers by quilting to obtain a catalyst filter.

The catalyst filter obtained above was subjected to the dropping test. The dropped amount was less than 3 %. The catalyst filter, which was obtained in the same manner as above, was subjected to the denitrification test. The denitrification rate was 70 % or more.

The catalyst filter, which had been subjected to the dropping test, was further subjected to the denitrification test. The denitrification rate was 70 % or more.

### Example 4

### Production of Nonwoven Fabric D

Polyimide fibers (trade name: P84; 2 deniers; short fibers of 60 mm; available from TOYO BOSEKI SALES, Inc.) (40 parts by weight) and fluororesin fibers (trade name: PROFILEN; 2.4 deniers on average; fiber length: 60 mm; available from Lenzing) (60 parts by weight) were mixed and processed by needle punching to obtain Nonwoven Fabric D having a weight per unit area of 200 g/m².

### Production of Scrim B

Fluororesin fibers (trade name: PROFILEN; 400 deniers; 40 filament yarn; twist S 100T/M; available from Lenzing) were plain woven at a weaving density of 25/25 yarn/inch (warp/weft) to obtain Scrim B having a weight per unit area of 100 g/m².

### Production of catalyst filter and evaluation thereof

On Nonwoven Fabric D, Scrim B, Nonwoven Fabric B produced by the method of Example 2 and another Nonwoven Fabric D were placed in this order and the resulting layeres were needle punched. Then, the thickness of the layers was adjusted with flat heat calendering, and the layers were singed with a gas singer to obtain a catalyst filter.

The catalyst filter obtained above was subjected to the dropping test. The dropped amount was less than 3 %. The catalyst filter, which was obtained in the same manner as above, was subjected to the denitrification test. The denitrification rate was 70 % or more.

The catalyst filter, which had been subjected to the dropping test, was further subjected to the denitrification test. The denitrification rate was 70 % or more.

## Claims

1. A catalyst filter comprising titania catalyst fiber and at least one layer of nonwoven fabric of polymer fiber.

2. The catalyst filter according to claim 1, wherein said titania catalyst fiber is retained in at least one layer of nonwoven fabric of polymer fiber.

3. The catalyst filter according to claim 1 or 2, which comprises at least two layers of nonwoven fabric of polymer fiber and at least one layer of said titania catalyst fiber, at least one layer of the titania catalyst fiber being interposed between at least two layers of nonwoven fabric.

4. The catalyst filter according to claim 1, 2 or 3 wherein said polymer fiber is at least one fiber selected from the group consisting of polyamide fiber, polypropylene fiber, polyester fiber, acrylic fiber, aramid fiber, fluororesin fiber, polyether imide fiber, polyimide fiber, polyphenylene sulfide fiber and polyketone fiber.

5. A method for producing a catalyst filter comprising the steps of:
dispersing titania catalyst fiber and polymer fiber in a solvent to obtain a dispersion of the fibers and
forming a sheet from the dispersion of the fibers to obtain the catalyst filter.

6. A method for producing a catalyst filter comprising the step of placing a layer of titania catalyst fiber on a layer of nonwoven fabric of polymer fiber.

7. The method according to claim 6, wherein said nonwoven fabric and said titania catalyst fiber are fixed together by adhering, knitting with yarns or entwining of the fibers.

8. A method for treating exhaust gas comprising passing exhaust gas through a catalyst filter according to claim 1.
